# EUROPÄISCHE PATENTSCHRIFT

(11) **EP 2 174 175 B1**
(45) Veröffentlichungstag und Bekanntmachung des Hinweises auf die Patenterteilung: **02.05.2012**
(21) Anmeldenummer: 08786454.2
(22) Anmeldetag: 25.07.2008
(51) Int. Cl.: G02B 7/00, F16M 11/04, G03B 17/56

(54) **BEFESTIGUNGSANORDNUNG FÜR OPTISCHE GERÄTE**
MOUNTING ARRANGEMENT FOR OPTICAL DEVICES
SYSTÈME DE FIXATION POUR APPAREILS OPTIQUES

(30) Priorität: 28.07.2007 DE 102007035562
(43) Veröffentlichungstag der Anmeldung: 14.04.2010
(73) Patentinhaber: Vogt, Philippe, 25048 Besancon (FR)
(72) Erfinder: Vogt, Philippe, 25048 Besancon (FR)
(74) Vertreter: Moser & Götze
(86) Internationale Anmeldenummer: PCT/EP2008/059794
(87) Internationale Veröffentlichungsnummer: WO 2009/016116

(56) Entgegenhaltungen:
- US-A1- 2003 194 268
- US-B1- 6 773 172

## Beschreibung

Die Erfindung betrifft eine Befestigungsanordnung für optische Geräte mit einer Befestigungsplatte, die eine hinterschnittene Führung ausbildet, um eine Klemmplatte aufzunehmen, wobei die Befestigungsplatte einem seitlichen Steg aufweist, in der eine hinterschnittene Profilnut ausgebildet ist, und mit einer gegenüber dem Steg liegenden Leiste, die über einen Klemmmechanismus beweglich mit der Befestigungsplatte verbunden ist und eine zweite hinterschnitte Profilnut aufweist, die gemeinsam mit der ersten hinterschnittenen Profilnut die hinterschnittene Führung ausbildet, wobei die Leiste zur Fixierung der Klemmplatte durch den Klemmmechanismus gegen die Befestigungsplatte angezogen werden kann, wodurch sich der Abstand der hinterschnitten Profilnuten verringert

Für den schnellen Wechsel von optischen Geräten an Stativen sind solche Befestigungsanordnungen bekannt, die eine nicht geschraubte Verbindung des optischen Geräts mit dem Stativ usw. erlauben. Diese Befestigungsvorrichtungen, auch als Schnellwechseladaptersysteme bekannt, bieten eine schnelle Wechselmöglichkeit in Verbindung mit einer sehr hohen Zuverlässigkeit.

Sie umfassen üblicher Weise eine Klemmplatte zur Befestigung an dem optischen Gerät und eine Befestigungsplatte, die an dem Stativ etc. befestigt wird und die Klemmplatte zur lösbaren Fixierung aufnimmt, wozu diese über einen Klemmmechanismus an der Befestigungsplatte klemmend befestigbar ist.

Aus dem US Patent 6,988,846 B2 bzw. der EP 0 982 613 B1 und dem US Patent US6773172 B1 ist eine solche Befestigungsanordnung für optische Geräte bekannt, bei der eine Befestigungsplatte eine Schwalbenschwanzführung ausbildet, um eine Klemmplatte aufzunehmen. Die Befestigungsplatte umfasst dazu eine in dieser ausgebildete seitliche Schwalbenschwanz-Profilnut. Die gegenüber liegende zweite Schwalbenschwanz-Profilnut ist dagegen über einen Klemmmechanismus beweglich mit der Befestigungsplatte verbunden, so dass sie die Schwalbenschwanz-Profilnut gegen die Befestigungsplatte anziehen kann. Zur Befestigung wird die Klemmplatte in die Schwalbenschwanz-Profilnuten eingeführt und die zweite Schwalbenschwanz-Profilnut durch den Klemmmechanismus gegen die Befestigungsplatte angezogen, so dass die Klemmplatte in der Schwalbenschwanzführung fixiert wird.

Dieser Mechanismus hat sich zwar über die Jahre als zuverlässig und gut handhabbar bewährt, jedoch ist das Gewicht solcher Befestigungsanordnungen relativ groß und die Befestigungsanordnung ist zudem unflexibel bezüglich unterschiedlicher Klemmplatten, da diese auf die Schwalbenschwanzführung exakt abgestimmt sein müssen. Auch müssen die Klemmplatten daher an das jeweilige optische Gerät angepasst sein.

Aus der DE 103 29 224 B3 ist eine Ausrichtvorrichtung für ein optisches Gerät bekannt, die als Zusatzgerät mit einer mechanischen Aufnahme versehen ist und damit fest mit dem optischen Gerät verbindbar ist, wobei die Ausrichtvorrichtung eine Entfernungsmeßeinrichtung zur Abstandsbestimmung von einem Objekt mit Mitteln zur Bestimmung von mindestens zwei Abstandsmaßen zwischen der Ausrichtvorrichtung und dem Objekt entlang mindestens zweier unterschiedlicher Meßachsen sowie zwei unabhängige Anzeigeeinrichtungen zur Anzeige der Abstandsmaße aufweist. Die Vorrichtung weist neben der unteren Aufnahme eine weitere obere Aufnahme auf, die auf gegenüberliegenden Seiten der Platte angeordnet sind. Die Aufnahmen sind als hinterschnittene Profilnuten ausgebildet.

Demgegenüber besteht die Aufgabe der vorliegenden Erfindung eine Befestigungsanordnung zu schaffen, die gegenüber den bekannten Anordnungen ein geringeres Gewicht aufweist und dabei flexibler ist für die Aufnahme unterschiedlicher Klemmplatten. Dabei soll die gute Handhabbarkeit und hohe Zuverlässigkeit beibehalten werden.

Diese Aufgabe wird durch die in Anspruch 1 wiedergegebene Befestigungsanordnung gelöst.

Dadurch, dass eine zweite hinterschnittene Führung durch weitere hinterschnittene Profilnuten in demselben seitlichen Steg der Befestigungsplatte bzw. derselben Leiste ausgebildet ist, wobei die Führungen beide auf einer Seite einer durch die Befestigungsplatte aufgespannten Ebene angeordnet sind, ist es möglich, unabhängig von der Ausgestaltung der ersten Führung eine zweite andersartige Führung für z.B. kleinere optische Geräte auszubilden und durch die Einbringung der zweiten Führung zudem Gewicht einzusparen, so dass die Anordnung leichter wird. Dabei wird das bewährte Klemmsystem beibehalten, so dass die Zuverlässigkeit gewahrt wird und eine Kompatibilität zu älteren Systemen besteht.

Zusätzlich lassen sich auch gleichzeitig zwei unterschiedliche oder ggf. gleiche Klemmplatten befestigen. Dies erlaubt eine flexiblere Verwendung z.B. zur Verlängerung etc.

Die Gewichtsersparnis spielt eine nicht unwesentliche Rolle, da es sich bei den optischen Geräten im Wesentlichen um schwere professionelle Photoapparate und Studiokameras handelt, die selbst sehr schwer sind, so dass eine Gewichtsersparnis die tägliche vielstündige und notwendige genaue Handhabung verbessert.

So können größere Geräte mit einer entsprechend großen Klemmplatte in eine der hinterschnittenen Führungen befestigt werden und kleinere optische Geräte mit einer entsprechend kleiner Klemmplatte in der anderen hinterschnittenen Führung befestigt werden. Daher können sowohl kleinere als auch größere optische Geräte unter Verwendung desselben Schnellwechselsystems verwendet werden, ohne dass eine gesonderte Befestigungsplatte nötig wäre. Somit wird die Befestigungsanordnung neben der damit verbundenen Gewichtsersparnis noch flexibler.

In einer besonders bevorzugten Ausführungsform sind die hinterschnittenen Profilnuten der zweiten hinterschnitten Führung in Richtung der Befestigungsplatte mit den hinterschnittenen Profilnuten der ersten hinterschnittenen Führung verschachtelt angeordnet, d.h. die Führungen liegen "übereinander" im Querschnitt der Anordnung besehen.

Der Abstand ist dabei vorzugsweise so groß, dass gleichzeitig zwei Klemmplatten aufgenommen werden können.

Weiter ist es bevorzugt, wenn der Abstand der hinterschnittenen Profilnuten der zweiten hinterschnittenen Führung geringer ist, als der Abstand der hinterschnittenen Profilnuten der ersten hinterschnittenen Führung ist, d.h. die kleinere Führung liegt "unten", so dass diese sich besonders für die Aufnahme kleinerer Klemmplatten eignet.

Besonders bevorzugt ist es, wenn die hinterschnittene Führung eine Schwalbenschwanzführung ist und die hinterschnittenen Profilnuten Schwalbenschwanz-Profilnuten sind. Diese ermöglichen eine sehr zuverlässige und gute Fixierung der Klemmplatten, da diese beim Aufeinanderzuziehen der Profilnuten die Klemmplatten gleichzeitig seitlich klemmen und nach unten auf die Befestigungsplatte drücken.

Zur weiteren Gewichtsersparnis ist vorgesehen, dass die Befestigungsplatte in der Unterseite mindestens eine, vorzugsweise drei Nuten aufweist. Ferner kann zusätzlich in der Außenseite des seitlichen Stegs eine Nut vorgesehen sein.

Weiterhin kann die Befestigungsplatte eine oder mehrere durchgehende Bohrungen im Bereich zwischen den Profilnuten aufweisen. Diese können neben der Verbindung zum Stativ etc. auch als Bohrungen zur Gewichtsersparnis dienen.

Die jeweilige Klemmplatte weist nach unten gerichtete beabstandete Federn auf, die zum Eingriff in die hinterschnittenen Profilnuten ausgebildet sind. Zwischen diesen Federn ist die Klemmplatte ausgenommen, so dass zum einen eine Schraubverbindung etc. mit dem optischen Gerät von unten durch die Platte möglich ist und zudem eine Gewichtsersparnis trotz hoher Stabilität erreichbar ist.

Durch diese Ausgestaltungen der Befestigungsanordnung ist es möglich, trotz geringer Baugröße der gesamten Anordnung eine hohe Gewichtsersparnis zu erreichen. So können etwa 50 g eingespart werden.

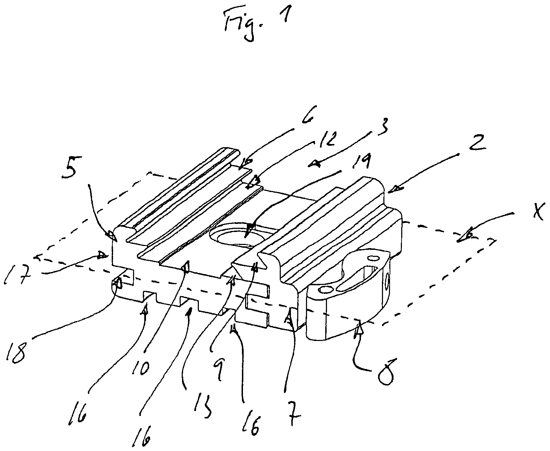

Weitere Einzelheiten, Merkmale und Vorteile der Erfindung ergeben sich aus der nachfolgenden Beschreibung eines Ausführungsbeispiels anhand der Zeichnung, in der
Fig. 1 eine schematische perspektivische Ansicht einer Befestigungsplatte der Erfindung zeigt und
Fig. 2 eine schematische perspektivische Ansicht der Befestigungsplatte aus Fig. 1 mit teilweise eingeführten Klemmplatten zeigt.

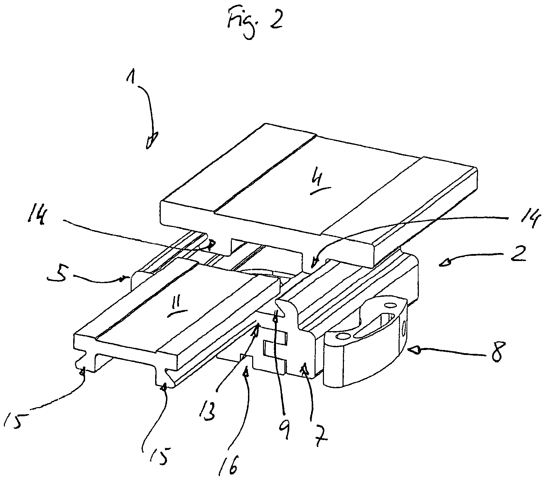

In den Figuren ist eine als Ganzes mit 1 bezeichnete Befestigungsanordnung für optische Geräte dargestellt. Die Befestigungsanordnung 1 umfasst eine Befestigungsplatte 2, die eine erste schwalbenschwanzartige hinterschnittene Führung 3 aufweist, um eine große Klemmplatte 4 (siehe Figur 2, dort in Blickrichtung von hinten teilweise eingeführt) aufzunehmen.

Die Befestigungsplatte 2 ist im Wesentlichen von rechteckiger plattenförmiger Gestalt und spannt eine durch sie hindurchgehende Ebene X auf.

Die Befestigungsplatte 2 weist einem seitlichen Steg 5 auf, in der eine hinterschnittene Schwalbenschwanz-Profilnut 6 ausgebildet ist, die eine Seite der Führung 3 ausbildet.

Auf der gegenüberliegenden Seite der Befestigungsplatte 2 ist eine Leiste 7 vorgesehen, die über einen nicht näher ausgeführten Klemmmechanismus 8 beweglich mit der Befestigungsplatte 2 verbunden ist und eine zweite hinterschnittene Schwalbenschwanz-Profilnut 9 der Führung 3 ausbildet.

Gemeinsam bilden also die Schwalbenschwanz-Profilnuten 6 und 9 die erste hinterschnittene Führung 3 aus, die auf einer Seite der Ebene X liegt.

Die Leiste 7 kann zur Fixierung der Klemmplatte 4 durch den Klemmmechanismus 8 gegen die Befestigungsplatte 2 angezogen werden, wodurch sich der Abstand der hinterschnittenen Profilnuten 6 und 9 verringert, so dass die dazwischen liegende Klemmplatte 2 fixierend geklemmt wird.

Die Befestigungsplatte 2 umfasst ferner eine zweite schwalbenschwanzartige hinterschnittene Führung 10, um eine kleine Klemmplatte 11 (siehe Figur 2, dort in Blickrichtung von vorne teilweise eingeführt) aufzunehmen.

Wie man erkennt, können ggf. beide Klemmplatten 4 und 11 gleichzeitig aufgenommen werden.

Dazu sind hinterschnittene Profilnuten 12 und 13 vorgesehen, die analog zu den Profilnuten 6 und 9, in dem seitlichen Steg 5 bzw. der Leiste 7 ausgebildet sind.

Die hinterschnittenen Profilnuten 12 und 13 der zweiten hinterschnitten Führung 10 sind in Richtung der Befestigungsplatte 2 hinter den hinterschnittenen Profilnuten 6, 9 der ersten hinterschnitten Führung 3 angeordnet, d.h. unterhalb bzw. in dieser verschachtelt. Beide Führungen 3, 10 liegen also auf einer Seite der Ebene X.

Der Abstand der hinterschnittenen Profilnuten 12, 13 der zweiten hinterschnittenen Führung 10 ist geringer, als der Abstand der hinterschnitten Profilnuten 6, 9 der ersten hinterschnittenen Führung 3.

Die Klemmplatten 4 bzw. 11 weisen an der Unterseite nach unten gerichtete beabstandete Federn 14, 15 auf, die zum Eingriff in die jeweiligen hinterschnittenen Profilnuten ausgebildet sind. Die Zwischenraum zwischen den Federn ist dabei ausgehöhlt, so dass weiter Gewicht eingespart wird.

Die Befestigungsplatte 2 weist sowohl in der Unterseite drei Nuten 16 als auch an der Außenseite 17 des seitlichen Stegs eine Nut 18 zur weiteren Gewichtsersparnis auf, die gleichzeitig als Verdrehsicherung dienen, wenn die Befestigungsanordnung in entsprechenden Verstelleinrichtungen aufgenommen ist.

Ferner weist die Befestigungsplatte 2 eine durchgehende Bohrung 19 im Bereich zwischen den Profilnuten auf, die zur Befestigung an einer Verstelleinrichtung, wie z.B. einem Kugelkopf eines Stativs, dient.

### Bezugszeichenliste

- 1: Befestigungsanordnung
- 2: Befestigungsplatte
- 3: Führung
- 4: Klemmplatte
- 5: Steg
- 6: Profilnut
- 7: Leiste
- 8: Klemmmechanismus
- 9: Profilnut
- 10: Führung
- 11: Klemmplatte
- 12: Profilnut
- 13: Profilnut
- 14: Feder
- 15: Feder
- 16: Nut
- 17: Außenseite
- 18: Nut
- 19: Bohrung
- X: Ebene

## Patentansprüche

1. Befestigungsanordnung (1) zur Befestigung optischer Gerätemittels einer Klemmplatte (4), wobei die Befestigungsanordnung (1) eine Befestigungsplatte (2) aufweist, die eine hinterschnittene Führung (3) ausbildet, um die Klemmplatte (4) aufzunehmen, wobei die Befestigungsplatte (2) einen seitlichen Steg (5) aufweist, in der eine hinterschnitte Profilnut (6) ausgebildet ist, und mit einer gegenüber dem Steg (5) liegenden Leiste (7), die über einen Klemmmechanismus (8) beweglich mit der Befestigungsplatte (2) verbunden ist und eine zweite hinterschnitte Profilnut (9) aufweist, die gemeinsam mit der ersten hinterschnittenen Profilnut (6) die hinterschnittene Führung (3) ausbilden, wobei die Leiste (7) zur Fixierung der Klemmplatte (4) durch den Klemmmechanismus (8) gegen die Befestigungsplatte (2) angezogen werden kann, wodurch sich der Abstand der hinterschnitten Profilnuten (6, 9) verringert, **dadurch gekennzeichnet, dass** eine zweite hinterschnittene Führung (10) zur Aufnahme einer weiteren Klemmplatte (4) durch weitere hinterschnittene Profilnuten (12, 13) in demselben seitlichen Steg (5) der Befestigungsplatte (2) bzw. derselben Leiste (7) ausgebildet ist, wobei die Führungen (3, 10) beide auf einer Seite einer durch die Befestigungsplatte (2) aufgespannten Ebene (X) angeordnet sind.

2. Befestigungsanordnung nach Anspruch 1, **dadurch gekennzeichnet, dass** die hinterschnittenen Profilnuten (12, 13) der zweiten hinterschnittenen Führung (10) in Richtung der Befestigungsplatte (2) mit den hinterschnitten Profilnuten (6, 9) der ersten hinterschnittenen Führung (3) verschachtelt angeordnet sind.

3. Befestigungsanordnung nach Anspruch 2, **dadurch gekennzeichnet, dass** der Abstand der hinterschnittenen Profilnuten (12, 13) der zweiten hinterschnittenen Führung (10) geringer ist, als der Abstand der hinterschnittenen Profilnuten (6, 9) der ersten hinterschnittenen Führung (3) ist.

4. Befestigungsanordnung nach einem der vorhergehenden Ansprüche, **dadurch gekennzeichnet, dass** die hinterschnittene Führung (3, 10) eine Schwalbenschwanzführung ist und die hinterschnittenen Profilnuten (6, 9; 12, 13) Schwalbenschwanz-Profilnuten sind.

5. Befestigungsanordnung nach einem der vorhergehenden Ansprüche, **dadurch gekennzeichnet, dass** die Befestigungsplatte (2) in der Unterseite mindestens eine, vorzugsweise drei Nuten (16) aufweist.

6. Befestigungsanordnung nach einem der vorhergehenden Ansprüche, **dadurch gekennzeichnet, dass** die Befestigungsplatte (2) in der Außenseite (17) des seitlichen Stegs (5) eine Nut (18) aufweist.

7. Befestigungsanordnung nach einem der vorhergehenden Ansprüche, **dadurch gekennzeichnet, dass** die Befestigungsplatte (2) eine durchgehende Bohrung (19) im Bereich zwischen den Profilnuten (6,9; 12, 13) aufweist.

8. Befestigungsanordnung nach einem der vorhergehenden Ansprüche, **dadurch gekennzeichnet, dass** die Klemmplatte (4, 11) nach unten gerichtete beabstandete Federn (14, 15) aufweist, die zum Eingriff in die hinterschnittenen Profilnuten (6, 9; 12, 13) ausgebildet sind.

## Claims

1. Mounting arrangement (1) for mounting optical devices in position by means of a clampable plate (4), the mounting arrangement (1) having a mounting plate (2) which forms an undercut guideway (3) to receive the clampable plate (4), the mounting plate (2) having a lateral ridge (5) in which an undercut profiled groove (6) is formed, and having a bar (7), situated opposite the ridge (5), which, by means of a clamping mechanism (8), is movably connected to the mounting plate (2) and which has a second undercut profiled groove (9) which, together with the first undercut profiled groove (6), forms the undercut guideway (3), the bar (7), to fix the clampable plate (4) in position, being able to be drawn towards the mounting plate (2) by the clamping mechanism (8) whereby the distance between the undercut profiled grooves (6, 9) is reduced, **characterised in that** a second undercut guideway (10), to receive a further clampable plate (4), is formed by two further undercut profiled grooves (12, 13) in, respectively, the same lateral ridge (5) on the mounting plate (2) and the same bar (7), the guideways (3, 10) both being arranged on one side of a plane (X) defined by the mounting plate (2).

2. Mounting arrangement according to claim 1, **characterised in that** the undercut profiled grooves (12, 13) of the second undercut guideway (10) are arranged to be nested in relation to the undercut profiled grooves (6, 9) of the first undercut guideway (3) in the direction of the mounting plate (2).

3. Mounting arrangement according to claim 2, **characterised in that** the distance between the undercut profiled grooves (12, 13) of the second undercut guideway (10) is smaller than the distance between the undercut profiled grooves (6, 9) of the first undercut guideway (3).

4. Mounting arrangement according to one of the preceding claims, **characterised in that** the undercut guideways (3, 10) are dovetail guideways and the undercut profiled grooves (6, 9; 12, 13) are dovetail profiled grooves.

5. Mounting arrangement according to one of the preceding claims, **characterised in that** the mounting plate (2) has at least one, and preferably three, grooves (16), in its underside.

6. Mounting arrangement according to one of the preceding claims, **characterised in that** the mounting plate (2) has a groove (18) in the outer side (17) of the lateral ridge (5).

7. Mounting arrangement according to one of the preceding claims, **characterised in that** the mounting plate (2) has a through-hole (19) in the region between the profiled grooves (6, 9; 12, 13).

8. Mounting arrangement according to one of the preceding claims, **characterised in that** the clampable plate (4, 11) has downwardly directed spaced tongues (14, 15) which are designed to engage in the undercut profiled grooves (6, 9; 12, 13).

## Revendications

1. Système de fixation (1) destiné à la fixation d'appareils optiques au moyen d'une plaque de serrage (4), le système de fixation (1) comportant une plaque de fixation (2), qui forme un guide contre-dépouillé (3) afin de recevoir la plaque de serrage (4), la plaque de fixation (2) comportant une nervure latérale (5) dans laquelle est ménagée une gorge profilée contre-dépouillée (6), ainsi qu'une baguette (7), située en face de la nervure (5), qui est reliée de façon mobile à la plaque de fixation (2) par le biais d'un mécanisme de serrage (8) et qui comporte une deuxième gorge profilée contre-dépouillée (8), qui forme conjointement avec la première gorge profilée contre-dépouillée (6) le guide contre-dépouillé (3), la baguette (7) pouvant être serrée contre la plaque de fixation (2) par le mécanisme de serrage (8) afin de fixer la plaque de serrage (4), de façon à réduire la distance entre les gorges profilées contre-dépouillées (6, 9), **caractérisé en ce qu'**un deuxième guide contre-dépouillé (10) est formé par d'autres gorges profilées contre-dépouillées (12, 13) dans la même nervure latérale (5) de la plaque de fixation (2) respectivement dans la même baguette (7) pour recevoir une autre plaque de serrage (4), les guides (3, 10) étant tous les deux disposés d'un côté d'un plan (X) passant par la plaque de fixation (2).

2. Système de fixation selon la revendication 1, **caractérisé en ce que** les gorges profilées contre-dépouillées (12, 13) du deuxième guide contre-dépouillé (10) sont disposées de façon imbriquée avec les gorges profilées contre-dépouillées (6, 9) du premier guide contre-dépouillé (3) en direction de la plaque de fixation (2).

3. Système de fixation selon la revendication 2, **caractérisé en ce que** la distance entre les gorges profilées contre-dépouillées (12, 13) du deuxième guide contre-dépouillé (10) est inférieure à la distance entre les gorges profilées contre-dépouillées (6, 9) du premier guide contre-dépouillé (3).

4. Système de fixation selon l'une des revendications précédentes, **caractérisé en ce que** le guide contre-dépouillé (3, 10) est un guide en queue d'aronde et les gorges profilées contre-dépouiltées (6, 9 ; 12, 13) sont des gorges profilées en queue d'aronde.

5. Système de fixation selon l'une des revendications précédentes, **caractérisé en ce que** la plaque de fixation (2) comporte du côté inférieur au moins une gorge (16), de préférence trois gorges.

6. Système de fixation selon l'une des revendications précédentes, **caractérisé en ce que** la plaque de fixation (2) comporte du côté extérieur (17) de la nervure latérale (5) une gorge (18).

7. Système de fixation selon l'une des revendications précédentes, **caractérisé en ce que** la plaque de fixation (2) possède un perçage traversant (19) dans la région située entre les gorges profilées (6, 9 ; 12, 13).

8. Système de fixation selon l'une des revendications précédentes, **caractérisé en ce que** la plaque de serrage (4, 11) comporte des ressorts (14, 15), espacés et orientés vers le bas, qui sont conformés de façon à s'engager dans les gorges profilées contre-dépouillées (6, 9; 12, 13).
